# EUROPÄISCHE PATENTSCHRIFT

(11) **EP 1 142 542 B1**
(45) Veröffentlichungstag und Bekanntmachung des Hinweises auf die Patenterteilung: **03.01.2007**
(21) Anmeldenummer: 01108358.1
(22) Anmeldetag: 03.04.2001
(51) Int. Cl.: A61C 13/12

(54) **Gelenkfräsarm für ein zahntechnisches Fräsgerät**
Milling articulated arm for a technical dental milling device
Bras articulé pour un dispositif de fraisage pour la technique dentaire

(30) Priorität: 07.04.2000 DE 10017477
(43) Veröffentlichungstag der Anmeldung: 10.10.2001
(73) Patentinhaber: DeguDent GmbH, 63457 Hanau-Wolfgang (DE)
(72) Erfinder: Schostek, Gerd, 63571 Gelnhausen (DE); Brinkmann, Hartmut, 49163 Bohmte (DE); Lingemann, Klaus-Dietrich, 49090 Osnabrück (DE); Finke, Otto, 43453 Rehden (DE)
(74) Vertreter: Stoffregen, Hans-Herbert

(56) Entgegenhaltungen:
- DE-A- 3 115 230
- DE-A- 3 930 154
- FR-A- 2 545 744
- US-A- 4 118 141
- US-A- 4 427 382

## Beschreibung

Die Erfindung betrifft einen Gelenkfräsarm für ein zahntechnisches Fräsgerät, dessen Fräsarm-Mittelstück einerseits mit einer gestellfesten, ersten vertikalen Gelenkachse und andererseits mit einer zweiten vertikalen Gelenkachse horizontal schwenkbar verbunden ist, die mit einem Träger für eine Fräseinheit starr verbunden ist, mit einer auf beide Gelenkachsen wirkenden gemeinsamen Klemmeinrichtung zur Fixierung des Gelenkfräsarms.

Beim Fräsen von dentalen Objekten, insbesondere Zahnmodellen und Zahnersatzteilen, können auf Grund anatomischer Zahnformen bestimmte Fräsvorgänge nur mit einer in einer horizontalen Ebene beweglichen Fräseinheit durchgeführt werden. Hierfür wird ein horizontal beweglicher Gelenkfräsarm benötigt, dessen Träger für die Fräseinheit üblicherweise eine Lineareinheit aufweist, die eine Bewegung der Fräseinheit senkrecht zur Bewegungsebene des Gelenkfräsarms ermöglicht.

Bekannte Gelenkfräsarme für zahntechnische Fräsgeräte bestehen üblicherweise aus mehreren, durch Gelenke verbundenen Gelenkarmgliedern, die die geforderte Beweglichkeit in der horizontalen Ebene ermöglichen.

Für andere Bearbeitungen, die üblicherweise ebenfalls mit zahntechnischen Fräsgeräten durchgeführt werden, wie z. B. Bohren oder Gewindeschneiden, ist es erforderlich, den Gelenkfräsarm starr und insbesondere in der horizontalen Ebene unbeweglich auszuführen, wobei lediglich die am Gelenkfräsarm angebrachte Lineareinheit in Richtung der Bearbeitungsachse einen Freiheitsgrad aufweisen darf. Da solche Bohr- und Schneidoperationen mit hoher Genauigkeit ausgeführt werden müssen, muß der während der Bearbeitung starre Gelenkfräsarm eine hohe Steifigkeit und Unnachgiebigkeit aufweisen.

Um diese widersprüchlichen Anforderungen zu erfüllen, wurden zahntechnische Fräsgeräte entwickelt, die zwei unterschiedliche Fräsarme aufweisen, wobei der eine Fräsarm gelenkig ausgeführt ist und die geforderte horizontale Beweglichkeit aufweist, während ein zweiter Fräsarm starr ausgeführt ist und die für die genannten Bohr- und Schneidoperationen erforderliche Steifigkeit und Unnachgiebigkeit aufweist. Der hierfür erforderliche Bauaufwand ist beträchtlich.

Andere bekannte Fräsgeräte lösen diese Anforderungen, indem die Gelenke des Gelenkfräsarms durch Klemmeinrichtungen fixiert werden können. Hierdurch kann auf einen zweiten, starren Fräsarm verzichtet werden.

Bei einem bekannten zahntechnischen Fräsgerät (DE 36 11 518 C2) erfolgt eine mechanische Fixierung der Gelenke durch gesondert zu betätigende mechanische Klemmeinrichtungen, beispielsweise durch Knebel oder Handräder. Hierbei ist die Ausführung mehrerer Handgriffe erforderlich, um den Gelenkfräsarm zu fixieren. Außerdem hängt die Arretierungswirkung von den jeweils vom Benutzer aufgebrachten Handkräften ab.

Daneben ist es bekannt, für jedes Gelenk eines Gelenkfräsarms für ein zahntechnisches Fräsgerät eine gesonderte elektromagnetische Bremseinrichtung vorzusehen (DE 3 115 230 A1). Dadurch ist zwar eine Fernbetätigung möglich; der erforderliche Bauaufwand ist jedoch beträchtlich. Die erzielbaren Klemmkräfte sind jedoch bauartbedingt verhältnismäßig gering, so daß bei größeren Belastungen ein Nachgeben der Arretierung zu unpräzisen Arbeitsvorgängen führt. Dieser Nachteil besteht auch bei einer mechanischen Arretierung, wenn die durch den Benutzer aufzubringenden Klemmkräfte undefiniert und oftmals zu gering sind, so daß hier ebenfalls die Gefahr unpräziser Arbeitsvorgänge besteht.

Bei einem bekannten Gelenkfräsarm der eingangs genannten Gattung (DE-G 94 16 767.2 U1) wird die auf die beiden Gelenkachsen wirkende gemeinsame Klemmeinrichtung mittels einer von Hand anzuziehenden Flügelmutter betätigt. Auch hierbei hängen die erzielbaren Klemmkräfte von der jeweils vom Benutzer aufgebrachten Handkraft ab; der Bewegungsablauf zum Arretieren der Achsen ist unergonomisch und ermöglicht keine Fernbetätigung.

Aufgabe der Erfindung ist es daher, einen Gelenkfräsarm der eingangs genannten Gattung so auszubilden, daß bei verhältnismäßig einfachem konstruktivem Aufbau hohe Klemmkräfte durch Fernbetätigung auf die Gelenke des Gelenkfräsarms aufgebracht werden können, so daß ein sicherer und ergonomisch vorteilhafter Arbeitsablauf ermöglicht wird.

Diese Aufgabe wird erfindungsgemäß dadurch gelöst, daß die beiden Gelenkachsen jeweils eine Bremsfläche aufweisen und daß eine axial bewegliche Bremsplatte mittels einer gemeinsamen, druckmittelbetätigten Bremsbetätigungseinrichtung gegen beide Bremsflächen drückbar ist.

Die Druckmittelbetätigung der gemeinsamen Bremsplatte ermöglicht die Aufbringung hoher Bremskräfte auf beide Gelenke, so daß eine sichere Fixierung des Gelenkfräsarms sichergestellt ist. Die Fernbetätigung der Bremsbetätigungseinrichtung ermöglicht einen einfachen und ergonomischen Arbeitsablauf, wobei die aufgebrachten, hohen Klemmkräfte nicht von der Handkraft des Benutzers abhängen.

Vorzugsweise ist die Bremsplatte mit einer großflächigen, pneumatisch oder hydraulisch beaufschlagbaren Membran verbunden. Die Verwendung einer Membran als druckmittelbetätigtes Antriebsglied ermöglicht eine verhältnismäßig einfache Bauweise mit großen druckmittelbeaufschlagten Flächen, so daß hohe Klemmkräfte schon mit verhältnismäßig geringem Druck erzeugbar sind.

Vorzugsweise liegt die Membran an der Bremsplatte an und eine auf der gegenüberliegenden Membranseite befindliche Druckkammer ist pneumatisch oder hydraulisch beaufschlagbar. Dadurch ergibt sich eine besonders einfache Übertragung der pneumatisch oder hydraulisch erzeugten Kräfte auf die Bremsplatte.

Besonders vorteilhaft ist es, wenn sich die Druckkammer im Wesentlichen über die gesamte Fläche der Bremsplatte erstreckt. Dadurch wird die gesamte zur Verfügung stehende Fläche der Bremsplatte mit Druck beaufschlagt.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:
Fig. 1 ein zahntechnisches Fräsgerät in einer Seitenansicht und teilweise im Schnitt,
Fig. 2 einen vergrößerten senkrechten Teilschnitt durch den Gelenkfräsarm des Fräsgeräts nach Fig. 1 und

Fig. 3 einen Schaltplan der druckmittelbetätigbaren Bremsbetätigungseinrichtung für den Gelenkfräsarm nach Fig. 2.

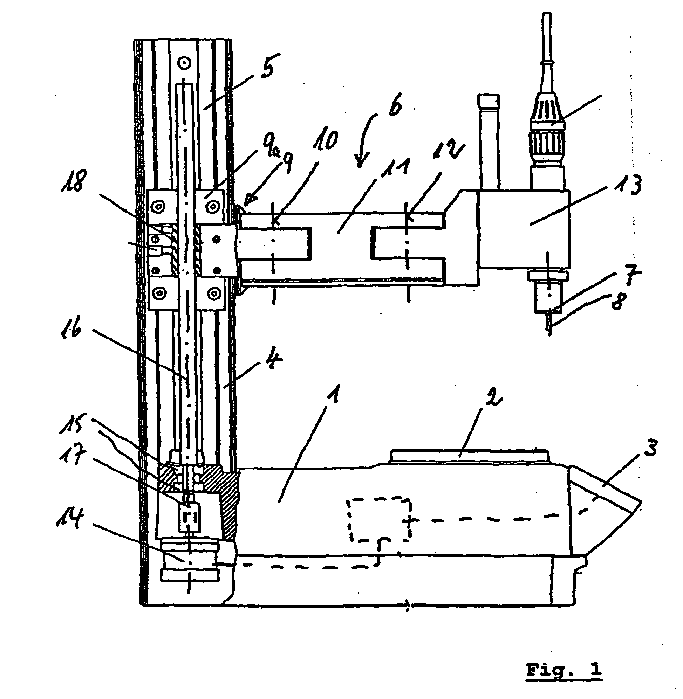

Ein Grundkörper 1 des zahntechnischen Fräsgeräts nach Fig. 1 trägt einen Arbeitstisch 2 und ein elektrisches Bedienfeld 3. Der Arbeitstisch 2 dient zur Aufnahme der zu bearbeitenden zahntechnischen Objekte. Der Grundkörper 1 ist mit einer senkrechten Führungssäule 4 verbunden, die eine Führungsbahn 5 für einen Gelenkfräsarm 6 aufweist, der eine Fräseinheit 7 trägt, in der ein auswechselbares Fräs- oder Bohrwerkzeug 8 aufgenommen ist. Der Gelenkfräsarm 6 weist einen entlang der Führungsbahn 5 der Führungssäule 4 verfahrbaren einen Tragschlitten 9a bildenden Fräsarmträger 9 auf. Der Tragschlitten 9a ist über eine erste senkrechte Schwenkachse 10 mit einem Fräsarm-Mittelstück 11 horizontal schwenkbar verbunden. Das Fräsarm-Mittelstück 11 ist über eine zweite senkrechte Schwenkachse 12 mit einem Träger 13 für die Fräseinheit 7 schwenkbar verbunden.

Die Vertikalbewegung und Vertikalpositionierung des Gelenkfräsarms 6 erfolgt durch einen elektromotorischen Höhenverstellantrieb, der einen durch einen elektrischen Verstellmotor 14 antreibbaren Spindeltrieb aufweist. Eine im Grundkörper 1 in Lagern 15 gelagerte, sich entlang der vertikalen Führungssäule 4 erstreckende Gewindespindel 16 ist über eine Kupplung 17 mit dem Verstellmotor 14 verbunden. Die Gewindespindel 16 steht mit einer im Tragschlitten 9a angeordneten Spindelmutter 18 in Eingriff.

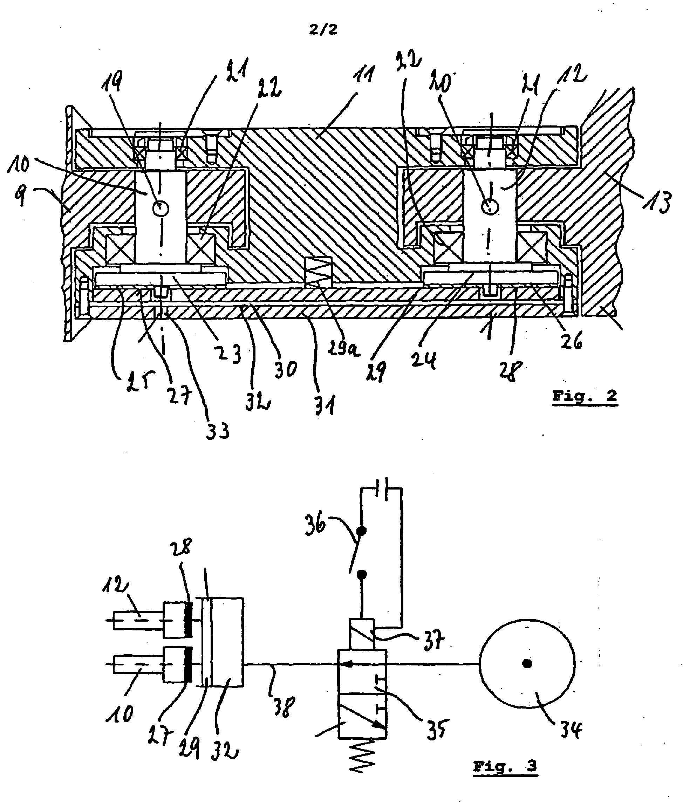

Wie in Fig. 2 in Einzelheiten dargestellt ist, ist die erste Gelenkachse 10 über einen Stift 19 starr mit dem Fräsarmträger 9 verbunden. Ebenso ist die zweite Gelenkachse 12 über einen Stift 20 starr mit dem Träger 13 verbunden. Das Fräsarm-Mittelstück 11 ist über Wälzlager 21, 22 an den beiden Schwenkachsen 10, 12 um vertikale Achsen schwenkbar gelagert. Vorzugsweise sind mindestens die Lager 22 als Axialdrucklager, vorzugsweise Kegelrollenlager ausgeführt.

An den beiden Gelenkachsen 10, 12 ist jeweils stirnseitig eine Bremsscheibe 23 bzw. 24 angebracht. Die beiden Bremsscheiben tragen jeweils einen Reibbelag 25 bzw. 26, die jeweils eine stirnseitige Bremsfläche 27 bzw. 28 bilden.

An der Unterseite des Fräsarm-Mittelstücks 11 ist eine Bremsplatte 29 axial beweglich aufgenommen, die gegen die beiden Bremsflächen 27, 28 drückbar ist.

An der den Bremsflächen 27, 28 gegenüber liegenden Seite der Bremsplatte 29 liegt eine flexible Membran 30 an. Zwischen einer sich über die gesamte Außenfläche der Membran 30 erstreckenden Abdeckplatte 31 und der Membran 30 ist eine sich im Wesentlichen über die gesamte Fläche der Bremsplatte 29 erstreckende Druckkammer 32 ausgebildet, die über eine Bohrung 33 pneumatisch oder hydraulisch mit Druckmittel beaufschlagbar ist. Die Membran 30 ist an ihrem Rand dicht zwischen dem Fräsarm-Mittelstück 11 und der Abdeckplatte 31 eingeklemmt. Das Volumen der Druckkammer 32 ist sehr gering, so daß für die Betätigung der Klemmeinrichtung nur eine sehr geringe Luftmenge benötigt wird.

Zwischen dem Fräsarm-Mittelstück 11 und der Bremsplatte 29 ist eine bei diesem Beispiel als Druckfeder ausgeführte Feder 29a angeordnet, die die Bremsplatte 29 im unbeaufschlagten Zustand von den Bremsflächen 27, 28 abhebt. Dadurch wird die Leichtgängigkeit beim freien Fräsen mit beweglichem Gelenkfräsarm sichergestellt.

Fig. 3 zeigt in einem schematischen Schaltplan die pneumatische Bremsbetätigungseinrichtung. Ein Druckluftspeicher 34 ist mit einem Umschaltventil 35 verbunden, das beim dargestellten Ausführungsbeispiel über einen Betätigungsschalter 36 und ein Relais 37 betätigt wird. Stattdessen ist auch eine Handbetätigung des Umschaltventils 35 möglich. Das Umschaltventil 35 liefert über eine Leitung 38 den erforderlichen Betätigungsdruck an die Druckkammer 32. Die Bremsplatte 29 wird gegen die beiden Bremsflächen 27 und 28 gedrückt und bewirkt eine kraftschlüssige starre Verbindung der Bremsplatte 29 mit den beiden Gelenkachsen 10 und 12. Anstelle der beschriebenen pneumatischen Betätigung ist auch eine hydraulische Betätigung möglich. Die Erzeugung des notwendigen Drucks kann auch über eine externe oder in das Gerät integrierte Pumpe erfolgen.

Neben der beschriebenen axialen Beaufschlagung der Bremsflächen an den beiden Gelenkachsen 10 und 12 sind auch Ausführungen möglich, bei denen radial auf Bremsflächen an den Gelenkachsen 10 und 12 eingewirkt wird.

## Patentansprüche

1. Gelenkfräsarm für ein zahntechnisches Fräsgerät, dessen Fräsarm-Mittelstück einerseits mit einer gestellfesten, ersten vertikalen Gelenkachse und andererseits mit einer zweiten vertikalen Gelenkachse horizontal schwenkbar verbunden ist, die mit einem Träger für eine Fräseinheit starr verbunden ist, mit einer auf beide Gelenkachsen wirkenden gemeinsamen Klemmeinrichtung zur Fixierung des Gelenkfräsarms,
**dadurch gekennzeichnet,**
**daß** die beiden Gelenkachsen (10, 12) jeweils eine Bremsfläche (27, 28) aufweisen und daß eine axial bewegliche Bremsplatte (29) mittels einer gemeinsamen, druckmittelbetätigten Bremsbetätigungseinrichtung gegen beide Bremsflächen (27, 28) drückbar ist.

2. Gelenkfräsarm nach Anspruch 1,
**dadurch gekennzeichnet,**
**daß** die Bremsplatte (29) mit einer großflächigen, pneumatisch oder hydraulisch beaufschlagbaren Membran (30) verbunden ist.

3. Gelenkfräsarm nach Anspruch 2,
**dadurch gekennzeichnet,**
**daß** die Membran (30) an der Bremsplatte (29) anliegt und eine auf der gegenüberliegenden Membranseite befindliche Druckkammer (32) pneumatisch oder hydraulisch beaufschlagbar ist.

4. Gelenkfräsarm nach Anspruch 3,
**dadurch gekennzeichnet,**
**daß** sich die Druckkammer (32) im wesentlichen über die gesamte Fläche der Bremsplatte (29) erstreckt.

5. Gelenkfräsarm nach Anspruch 1,
**dadurch gekennzeichnet,**
**daß** die Bremsplatte (29) im unbeaufschlagten Zustand durch eine Feder (29a) von den Bremsflächen (27, 28) abgehoben wird.

6. Gelenkfräsarm nach Anspruch 1,
**dadurch gekennzeichnet,**
**daß** die Bremsflächen (27, 28) von stirnseitig an den Gelenkachsen (10, 12) angebrachten Bremsscheiben (23, 24) gebildet werden.

7. Gelenkfräsarm nach Anspruch 6,
**dadurch gekennzeichnet,**
**daß** die Bremsscheiben (23, 24) jeweils einen Reibbelag (25 bzw. 26) tragen.

8. Gelenkfräsarm nach Anspruch 1,
**dadurch gekennzeichnet,**
**daß** das Gelenkarm-Mittelstück (11) über Axialdrucklager (22), vorzugsweise Kegelrollenlager, an den beiden Gelenkachsen (10, 12) gelagert ist.

## Claims

1. An articulated milling arm for a dental milling instrument, the middle portion of the milling arm being connected in horizontally swivelling manner on the one hand to a first vertical articular axis which is fixed with respect to the frame and on the other hand to a second vertical articular axis which is rigidly connected to a support for a milling unit, with a common clamping device acting on both articular axes for the purpose of fixing the articulated milling arm,
**characterized in**
**that** the two articular axes (10, 12) each comprise one braking surface (27, 28) and in that an axially mobile braking plate (29) is capable of being pressed against both braking surfaces (27, 28) by means of a common brake-actuating device which is actuated by pressure means.

2. Articulated milling arm according to claim 1,
**characterized in**
**that** the braking plate (29) is connected to a pneumatically or hydraulically pressurizable diaphragm (30) having a large area.

3. Articulated milling arm according to claim 2,
**characterized in**
**that** the diaphragm (30) bears against the braking plate (29), and a pressure chamber (32) which is located on the opposite side of the diaphragm is capable of being pressurized pneumatically or hydraulically.

4. Articulated milling arm according to claim 3,
**characterized in**
**that** the pressure chamber (32) extends substantially over the entire area of the braking plate (29).

5. Articulated milling arm according to claim 1,
**characterized in**
**that** in the underpressurized state the braking plate (29) is lifted away from the braking surfaces (27, 28) by a spring (29a).

6. Articulated milling arm according to claim 1,
**characterized in**
**that** the braking surfaces (27, 28) are formed by braking discs (23, 24) which are fitted frontally on the articular axes (10, 12).

7. Articulated milling arm according to claim 6,
**characterized in**
**that** the braking discs (23, 24) each bear one friction lining (25 and 26, respectively).

8. Articulated milling arm according to claim 1,
**characterized in**
**that** the middle portion (11) of the articulated arm is supported on the two articular axes (10, 12) via thrust bearings (22), preferably via tapered roller bearings.

## Revendications

1. Bras de fraisage articulé pour un appareil de fraisage dentaire, dont la partie centrale de bras de fraisage est reliée en pivotement horizontal d'une part à un premier axe articulé vertical solidaire du bâti et d'autre part à un deuxième axe articulé vertical relié solidement à un support pour une unité de fraisage, avec un dispositif de serrage commun agissant sur les deux axes articulés pour fixer le bras de fraisage articulé,
**caractérisé en ce que**
les deux axes articulés (10, 12) présentent chacun une surface de freinage (27, 28), et une plaque de freinage (29) mobile axialement peut être poussée contre les deux surfaces de freinage (27, 28) au moyen d'un dispositif d'actionnement de frein commun commandé par un moyen de pression.

2. Bras de fraisage articulé selon la revendication 1,
**caractérisé en ce que**
la plaque de freinage (29) est reliée à une membrane (30) de grande surface pouvant être sollicitée pneumatiquement ou hydrauliquement.

3. Bras de fraisage articulé selon la revendication 2,
**caractérisé en ce que**
la membrane (30) repose contre la plaque de freinage (29), et une chambre de pression (32) située sur la face de membrane opposée peut être sollicitée pneumatiquement ou hydrauliquement.

4. Bras de fraisage articulé selon la revendication 3,
**caractérisé en ce que**
la chambre de pression (32) s'étend pour l'essentiel sur toute la surface de la plaque de freinage (29).

5. Bras de fraisage articulé selon la revendication 1,
**caractérisé en ce qu'**
à l'état non sollicité, la plaque de freinage (29) est soulevée des surfaces de freinage (27, 28) par un ressort (29a).

6. Bras de fraisage articulé selon la revendication 1,
**caractérisé en ce que**
les surfaces de freinage (27, 28) sont formées par des disques à frein (23, 24) rapportés sur les faces frontales des axes articulés (10, 12).

7. Bras de fraisage articulé selon la revendication 6,
**caractérisé en ce que**
les disques à frein (23, 24) portent chacun une garniture de friction (25 ou 26).

8. Bras de fraisage articulé selon la revendication 1,
**caractérisé en ce que**
la partie centrale de bras articulé (11) est logée sur les deux axes articulés (10, 12) au moyen de paliers de butée axiale (22), de préférence des paliers coniques à rouleaux.
